# FASCICULE DE BREVET EUROPEEN

(11) **EP 0 681 129 B1**
(45) Date de publication et mention de la délivrance du brevet: **27.05.1998**
(21) Numéro de dépôt: 95810279.0
(22) Date de dépôt: 26.04.1995
(51) Int. Cl.: F16K 31/06

(54) **Valve hydraulique à commande électromagnétique pulsée**
Impulsgesteuertes elektromagnetisches Ventil
Pulse-controlled electromagnetic valve

(30) Priorité: 03.05.1994 CH 1386/94
(43) Date de publication de la demande: 08.11.1995
(73) Titulaire: PARKER LUCIFER SA, 1227 Carouge (Genève) (CH)
(72) Inventeur: Livet, Jean, CH - 1209 Geneve (CH)
(74) Mandataire: Meylan, Robert Maurice

(56) Documents cités:
- DE-B- 1 211 455
- GB-A- 970 551
- US-A- 3 022 799
- US-A- 3 324 889

## Description

La présente invention a pour objet une valve hydraulique à commande électromagnétique pulsée, comprenant un corps en matériau ferromagnétique délimitant une chambre dans laquelle un noyau mobile, formant obturateur, peut se déplacer, contre l'action d'un ressort, entre un siège et un noyau fixe, sous l'action d'un champ magnétique produit par une bobine entourant ladite chambre, le noyau mobile coopérant avec au moins un siège pour contrôler le passage d'un fluide entre ladite chambre et au moins un orifice de raccordement.

Ce type d'électrovalve est utilisé pour régler une pression ou un débit, le réglage étant obtenu en envoyant dans la bobine des impulsions de courant pour ouvrir ou fermer le clapet de valve, selon que le clapet est ouvert ou fermé lorsque la bobine n'est pas alimentée. Ces électrovalves sont généralement alimentées à fréquence constante, les temps d'ouverture et de fermeture du clapet de valve pouvant être toutefois modifiés dans la période pour obtenir la pression ou le débit désiré. La fonction peut être réalisée en deux ou trois voies.

Pour atteindre une bonne précision de réglage, il est indispensable que la course de l'obturateur, c'est-à-dire du noyau mobile, soit définie avec une grande précision. La course exigée est, par exemple, de 8/100 de mm avec une tolérance de ± 1/100.

Dans la valve selon le préambule de la revendication 1 décrite dans le brevet EP 0 197 232, cette course peut être ajustée au moyen d'un bouchon vissé dans le corps de valve. Un tel mode d'ajustement est toutefois coûteux et difficile à maîtriser, étant donné qu'il est très difficile de mesurer la course du noyau mobile réglée de cette manière.

Dans la valve hydraulique décrite dans le brevet suisse 655 371, également prévue pour être alimentée en courant pulsé, la course du noyau mobile obturateur est déterminée par la dimension des pièces constitutives de la valve, de sorte que la précision de cette course est également déterminée par la précision de ces dimensions et de l'assemblage des pièces constitutives. Il est donc dans un tel cas pratiquement impossible de garantir la tolérance exigée, même au prix d'une fabrication très coûteuse.

La présente invention a pour but d'obtenir une course du noyau mobile très précise par des moyens aussi simples et peu coûteux que possible et ne nécessitant pas de réglage.

A cet effet, la valve selon l'invention est caractérisée en ce que le noyau mobile est monté dans un tube en matériau amagnétique pincé axialement entre ledit siège et la face frontale du noyau fixe, ce noyau fixe étant lui-même maintenu pressé contre l'extrémité correspondante du tube par un ressort prenant appui sur le corps de valve, la course du noyau mobile étant exclusivement déterminée par la différence de longueur entre le tube et le noyau mobile.

La course du noyau mobile est ainsi déterminée par les seules longueurs du tube et du noyau mobile. La seule précision exigée est donc la perpendicularité à l'axe des faces d'extrémité du tube et du noyau mobile et la différence de longueur de ces deux pièces. Toutes les autres pièces constitutives de la valve n'exigent aucune précision particulière. Le coût de fabrication des pièces constitutives de la valve et le coût de l'assemblage de la valve en sont dès lors très sensiblement réduits.

Ce mode de détermination de la course du noyau mobile permet en outre d'ajuster des courses très petites pour des fréquences de pulsation élevées et garantit une grande durée de vie de la valve. Il permet par ailleurs de protéger la partie fonctionnelle de toutes les contraintes mécaniques exercées sur la partie extérieure de la valve.

Le dessin annexé représente, à titre d'exemple, une forme d'exécution de l'invention.

La figure 1 représente, en coupe axiale, une électrovalve à trois voies destinée à un réglage de pression dans un circuit hydraulique.

La figure 2 représente la forme de la découpe de l'une des pièces constitutive de cette électrovalve.

La figure 3 est une vue partielle, vue de B, de la partie supérieure de l'enveloppe de la valve.

La figure 4 est une vue partielle, vue de A, de la partie inférieure de cette même enveloppe.

La figure 5 représente une variante d'exécution de la partie supérieure de cette même enveloppe.

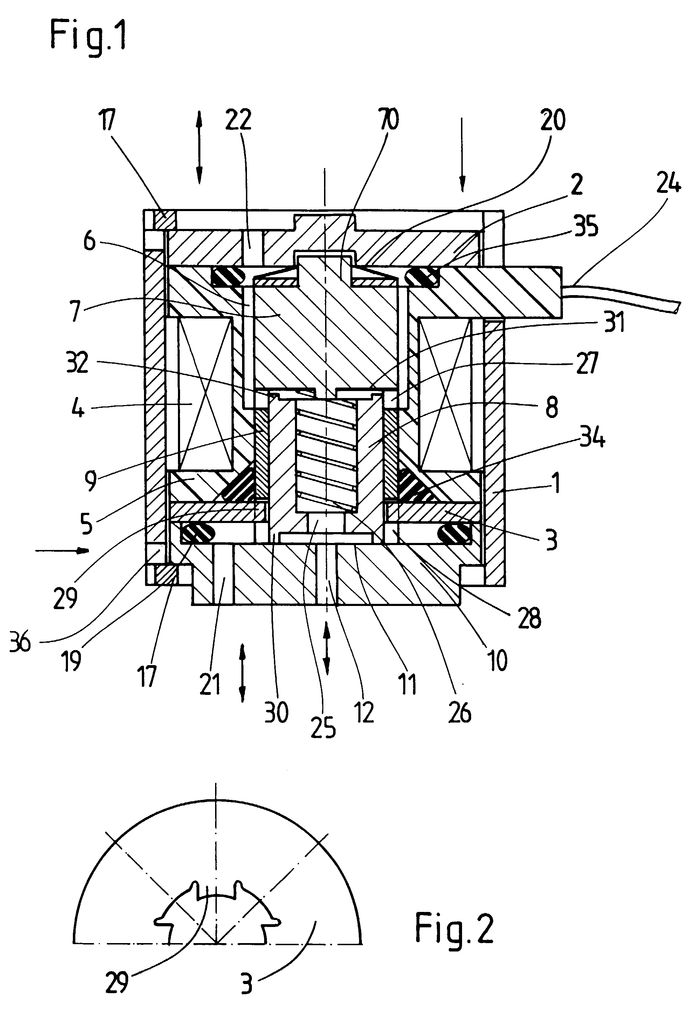

La valve représentée à la figure 1 comprend un corps de valve constitué d'une enveloppe cylindrique 1 en matériau ferromagnétique dans laquelle sont montées deux plaques polaires 2 et 3 également en matériau ferromagnétique, la culasse ainsi formée entourant une bobine 4 montée sur un corps de bobine 5 en matériau isolant limitant intérieurement une chambre 6 dans laquelle est montée un noyau fixe 7 engagé par une partie 70 de diamètre réduit dans une creusure centrale de la plaque polaire 2. Dans la chambre 6 est en outre monté un noyau mobile 8 entouré d'un tube 9 en métal amagnétique. La partie inférieure de l'enveloppe 1 est fermée par un flasque 10 présentant intérieurement un siège de clapet 11 et un orifice de raccordement 12. Le flasque 10 fixé à l'enveloppe 1 en trois points par saignée de l'enveloppe 1 et repoussage de la matière vers l'intérieur comme représenté en 17. La plaque polaire supérieure 2 est fixée de la même manière. Entre le flasque 10 et la pièce polaire inférieure 3 est disposée une garniture d'étanchéité élastique 19. La partie de diamètre réduit 70 du noyau fixe 7 est entourée d'un ressort 20 constitué ici d'une rondelle Belleville qui s'appuie sur la plaque polaire 2 et pousse le noyau fixe 7 vers le bas. Le tube 9 est ainsi pincé entre le noyau fixe 7 et le siège de clapet 11. La course du noyau mobile 8 est ainsi déterminée par la différence de hauteur entre le tube 9 et le noyau mobile 8.

A l'exception du noyau mobile 8, du tube 9, de la face intérieure du noyau fixe 7 et du siège de clapet 11, les autres pièces constitutives de la valve et des autres dimensions n'exigent pas une grande précision. L'assemblage de la valve s'effectue par une opération équivalente à un simple sertissage qui n'exige aucune précision, le ressort 20 et la garniture 19 étant capables d'absorber d'importantes variations.

La valve représentée est une valve à trois voies qui comporte, en plus de l'orifice de raccordement 12, par lequel le fluide contrôlé entre et sort, un orifice 21 dans le flasque 10 et un orifice 22 dans la pièce polaire 2. La bobine 4 est alimentée par une paire de conducteurs 24. La valve peut être également utilisée comme valve à deux voies et le fluide peut traverser les orifices 12, 21, 22 dans les deux sens comme indiqué par les doubles flèches.

Le noyau mobile 8 présente un passage axial 25 et, en l'absence de courant dans la bobine, il est maintenu en contact avec le siège 11 par un ressort hélicoïdal 26 logé dans le noyau mobile. Le tube 9 présente, à chacune de ses extrémités, un certain nombres de créneaux 27, respectivement 28 pour le passage du fluide. La présence des créneaux 28 est en outre utilisée pour laisser pénétrer des parties 29 saillantes radialement de la pièce polaire inférieure 3, de manière à réduire l'entrefer entre la pièce polaire 3 et le noyau mobile et à assurer ainsi une meilleure fermeture du circuit magnétique. L'obturation de l'orifice 12 est assurée de manière connue par une extrémité en forme de couronne 30 du noyau mobile 8. De manière à éviter un collage du noyau mobile 8 lorsqu'il est attiré contre le noyau fixe 7, ce dernier est muni, de manière connue, d'une mince plaquette amagnétique 31 contre laquelle s'appuie également le tube 9. En position attirée, le noyau mobile 8 assure l'obturation par le contact d'une mince couronne extérieure 32.

Dans l'exécution représentée, la chambre 6 est divisée en deux par une garniture d'étanchéité 34, ceci pour des raisons évidentes si l'on examine les passages du fluide dans la valve.

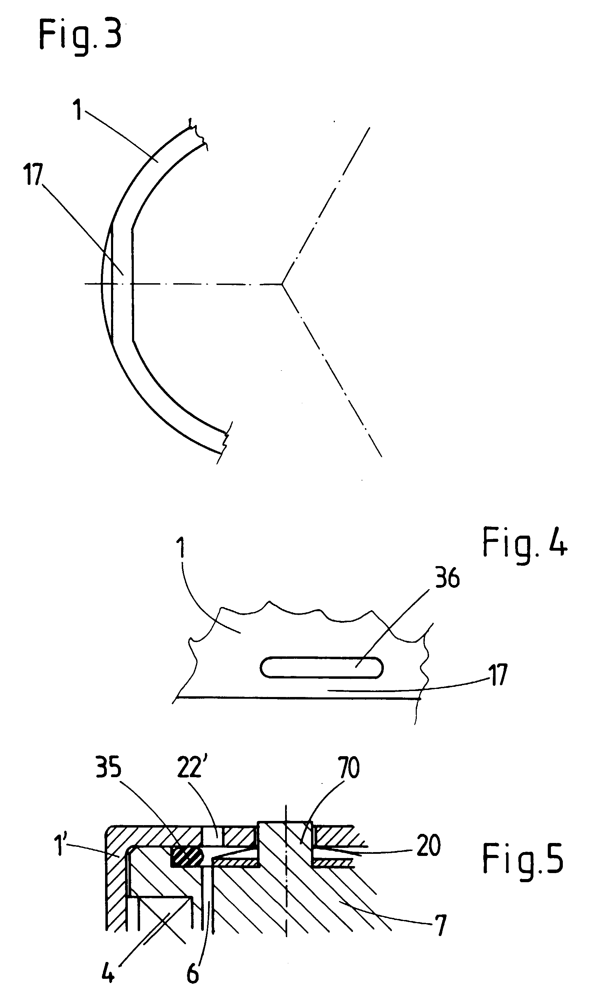

L'exécution représentée peut être simplifiée en remplaçant l'enveloppe cylindrique tubulaire 1 par une enveloppe en forme de pot 1' telle que représentée à la figure 5. Ce pot permet de supprimer la pièce polaire 2. La partie 70 du noyau fixe 7 est engagée dans une découpe du fond de ce pot 1' qui présente en outre un orifice 22' analogue à l'orifice 22.

Le mode de détermination de la course d'un obturateur constitué d'un noyau mobile selon l'invention peut être utilisé dans tout type de valve et pour pour toute application.

## Revendications

1. Valve hydraulique à commande électromagnétique pulsée, comprenant un corps en matériau ferromagnétique (1) délimitant une chambre (6) dans laquelle un noyau mobile (8), formant obturateur, peut se déplacer, contre l'action d'un ressort (26), entre un siège (11) et un noyau fixe (7), sous l'action d'un champ magnétique produit par une bobine (4) entourant ladite chambre, le noyau mobile coopérant avec au moins un siège (11) pour contrôler le passage d'un fluide entre ladite chambre et au moins un orifice de raccordement, caractérisée en ce que le noyau mobile (8) est monté dans un tube (9) en matériau amagnétique pincé axialement entre ledit siège (11) et la face frontale du noyau fixe (7), ce noyau fixe étant lui-même maintenu pressé contre l'extrémité correspondante du tube par un ressort (20) prenant appui sur le corps de valve, la course du noyau mobile étant exclusivement déterminée par la différence de longueur entre le tube et le noyau mobile.

2. Valve hydraulique selon la revendication 1, caractérisée en ce que ledit tube (9) présente des créneaux (28) à son extrémité en contact avec ledit siège et que le circuit magnétique comprend une pièce polaire (3) en forme de rondelle dont la découpe intérieure présente des parties saillantes (29) engagées radialement dans lesdits créneaux de manière à entourer le noyau mobile.

3. Valve hydraulique selon la revendication 1 ou 2, caractérisée en ce que le ressort (20) maintenant le noyau fixe contre le tube s'appuie sur une plaque en matériau ferromagnétique (2) fermant le circuit magnétique du corps de valve.

4. Valve hydraulique selon la revendication 3, caractérisée en ce que ladite plaque (2) présente un trou central dans lequel le noyau fixe (7) est engagé par une partie de diamètre réduit (70).

5. Valve hydraulique selon les revendications 1 à 4, caractérisée en ce que le corps de valve est constitué essentiellement d'une enveloppe cylindrique tubulaire (1) fermée à l'une de ses extrémités par ladite plaque polaire (2) et à l'autre extrémité par un flasque (10) portant le siège de clapet (11) et que l'ensemble des pièces constituant la valve sont maintenues dans l'enveloppe cylindrique (1) par la fixation dudit flasque (10) à l'une des extrémités de l'enveloppe cylindrique et de la plaque polaire opposée (2) à l'autre extrémité de l'enveloppe cylindrique par déformation locale de la- paroi de l'enveloppe cylindrique, des garnitures d'étan chéité élastiques (19, 35, 34) assurant l'étanchéité nécessaire.

6. Valve hydraulique selon les revendications 1 et 2, caractérisée en ce que le corps en matériau ferromagnétique est constitué d'un pot (1') dans lequel sont empilées les pièces constitutives de la valve et qui est fermée par un flasque (10) supportant le siège de clapet (1').

## Patentansprüche

1. Impulsgesteuertes elektromagnetisches Hydraulikventil mit einem Körper aus ferromagnetischem Material(1), der eine Kammer (6) begrenzt, in welcher ein beweglicher, ein Verschlussstück bildender Kern (8) gegen die Wirkung einer Feder (26) zwischen einem Sitz(11) und einem festen Kern(7) unter der Wirkung eines Magnetfelds verschiebbar ist, welches von einer die erwähnte Kammer umgebenden Spule (4) erzeugt wird, wobei der bewegliche Kern zum Steuern des Durchflusses eines Fluids zwischen der erwähnten Kammer und wenigstens einer Anschlussöffnung mit einem Sitz (11) zusammenwirkt, dadurch gekennzeichnet, dass der bewegliche Kern (8) in einem aus amagnetischem Material bestehenden Rohr (9) montiert ist, das axial zwischen dem erwähnten Sitz (11) und der Stirnfläche des festen Kerns (7) eingeklemmt ist, dass der feste Kern selber durch eine Feder(20), die sich auf dem Ventilkörper abstützt, gegen das entsprechende Ende des Rohrs gedrückt gehalten wird und dass der Hub des beweglichen Kerns ausschliesslich durch die Längendifferenz zwischen dem Rohr und dem beweglichen Kern bestimmt ist.

2. Hydraulikventil nach Anspruch 1, dadurch gekennzeichnet, dass das erwähnte Rohr (9) an seinem mit dem erwähnten Sitz in Kontakt befindlichen Ende Zinnen (28) aufweist und dass der magnetische Kreis ein Polstück (3) in Form einer Scheibe hat, deren innerer Ausschnitt vorspringende Teile (29) aufweist, welche radial in die erwähnten Zinnen eingreifen, derart, dass sie den beweglichen Kern umgeben.

3. Hydraulikventil nach Anspruch 1 oder 2, dadurch gekennzeichnet, dass sich die den festen Kern gegen das Rohr haltende Feder (20) auf einer aus ferromagnetischem Material bestehenden Platte (2) abstützt, welche den magnetischen Kreis des Ventilkörpers schliesst.

4. Hydraulikventil nach Anspruch 3, dadurch gekennzeichnet, dass die erwähnte Platte (2) ein zentrales Loch hat, in das der feste Kern (7) mit einem Teil verringerten Durchmessers (70) eingreift.

5. Hydraulikventil nach den Ansprüchen 1 bis 4, dadurch gekennzeichnet, dass der Ventilkörper im wesentlichen aus einer rohrförmigen zylindrischen Hülle (1) besteht, die an einem ihrer Enden durch die erwähnte Polplatte (2) und am anderen Ende durch einen den Ventilsitz (11) tragenden Flansch verschlossen ist, und dass die Gesamtheit der das Ventil bildenden Teile in der zylindrischen Hülle (1) durch die Befestigung des erwähnten Flanschs (10) am einen Ende der zylindrischen Hülle sowie der gegenüberliegende Polplatte (2) am anderen Ende der zylindrischen Hülle durch lokale Verformung der Wand der zylindrischen Hülle gehalten wird, wobei elastische Dichtungen (19, 35, 34) die erforderliche Dichtheit gewährleisten.

6. Hydraulikventil nach den Ansprüchen 1 und 2, dadurch gekennzeichnet, dass der Körper aus ferromagnetischem Material aus einem Topf (1') besteht, in welchem die das Ventil bildenden Teile aufeinander gestapelt sind und der durch einen den Ventilsitz tragenden Flansch (10) verschlossen ist.

## Claims

1. Hydraulic valve controlled by electromagnetic pulses, comprising a body (1) made of ferromagnetic material delimiting a chamber (6) in which a moving core (8) forming a shut-off member can move, against the action of a spring (26), between a seat (11) and a stationary core (7) under the action of a magnetic field produced by a coil (4) surrounding the said chamber, the moving core interacting with at least one seat (11) to control the passage of a fluid between the said chamber and at least one connecting port, characterized in that the moving core (8) is mounted in a tube (9) made of nonmagnetic material trapped axially between the said seat (11) and the front face of the stationary core (7), this stationary core being itself held pressed against the corresponding end of the tube by a spring (20) which rests on the valve body, the travel of the moving core being determined exclusively by the difference in length between the tube and the moving core.

2. Hydraulic valve according to Claim 1, characterized in that the said tube (9) has crenellations (28) at its end in contact with the said seat and that the magnetic circuit comprises a pole piece (3) in the form of a washer, the internal cutout of which has projecting parts (29) which engage radially in the said crenellations so as to surround the moving core.

3. Hydraulic valve according to Claim 1 or 2, characterized in that the spring (20) keeping the stationary core against the tube rests on a plate (2) made of ferromagnetic material closing the magnetic circuit of the valve body.

4. Hydraulic valve according to Claim 3, characterized in that the said plate (2) has a central hole in which the stationary core (7) is engaged via a smaller-diameter part (70).

5. Hydraulic valve according to Claims 1 to 4, characterized in that the valve body essentially consists of a tubular cylindrical casing (1) closed at one of its ends by the said pole plate (2) and at the other end by an end plate (10) that bears the valve seat (11) and that all of the constituent pieces of the valve are held in the cylindrical casing (1) by the said end plate (10) being attached to one of the ends of the cylindrical casing and by the opposite pole plate (2) being attached to the other end of the cylindrical casing by local deformation of the wall of the cylindrical casing, elastic seals (19, 35, 34) providing the necessary sealing.

6. Hydraulic valve according to Claims 1 and 2, characterized in that the body made of ferromagnetic material consists of a pot (1') in which the constituent pieces of the valve are stepped and which is closed by an end plate (10) that supports the valve seat (1'[sic]).
